# DEMANDE DE BREVET EUROPEEN

(11) **EP 3 012 996 A1**
(43) Date de publication de la demande: **27.04.2016**
(21) Numéro de dépôt: 14306675.1
(22) Date de dépôt: 22.10.2014
(51) Int. Cl.: H04L 9/32, G06F 21/31, G06F 21/32

(54) **Évaluation d'un niveau de confiance dans la récolte d'informations par un terminal de communication par rapport des empreintes**

(71) Demandeur: Atos Worldline NV/SA, 1130 Brussels (BE)
(72) Inventeur: Cauchie, Stéphane, 59800 LILLE (FR); Alamélou, Quentin, 59000 LILLE (FR)
(74) Mandataire: Novagraaf Technologies

(57) **Abrégé**

L'invention concerne un procédé de détermination d'un niveau de confiance associé à des informations récoltées par un terminal de communication (T) par rapport à un ensemble d'empreintes, comprenant les étapes de :
- Détermination de règles associant un critère de proximité à chaque empreinte de l'ensemble ;
- Détermination, par le terminal de communication (T), d'un secret partiel pour chaque empreinte de l'ensemble en fonction de ces règles et des informations récoltées ;
- Calcul, par ledit terminal de communication (T), d'un score global à partir des secrets partiels ; ce score global étant représentatif du niveau de confiance.

## Description

### DOMAINE DE L'INVENTION

L'invention concerne le domaine de l'évaluation d'un niveau de confiance entre des informations récoltées par un terminal de communication par rapport à un ensemble d'empreintes préalablement établi.

Elle s'applique notamment à l'authentification d'un utilisateur d'un terminal de communication, notamment mobile, auprès d'un serveur d'authentification, notamment dans le domaine du commerce enligne sur le réseau Internet.

### CONTEXTE DE L'INVENTION

Le commerce enligne se développe à grande vitesse, notamment du fait de la démocratisation des moyens techniques et de l'augmentation de l'offre. Ce commerce enligne engendre en général des mécanismes de paiement ou autres qui nécessitent l'identification de l'utilisateur du terminal de communication, afin de lui imputer l'acte commercial (et la transaction financière correspondante).

Une telle transaction nécessite une confiance réciproque des parties. Il est pour cela nécessaire d'authentifier l'utilisateur du terminal.

Cette transaction doit être authentifiée afin de se prémunir d'actes de malveillances, notamment de piratage et de vol d'identifiants. En outre, la garantie d'un niveau d'authentification suffisant permet de lever les réticences des utilisateurs et donc d'accroître les chiffres d'affaire du commerce enligne.

Il est donc important de pouvoir apporter des mécanismes permettant de garantir un niveau suffisant d'authentification des utilisateurs.

L'ANSSI (Agence Nationale de la Sécurité des Systèmes Informatiques) a notamment recommandé de procéder à une authentification forte, c'est-à-dire reposant sur au moins deux facteurs d'authentification parmi les suivants :
- Le facteur mémoriel, AF1 (« Ce que l'on sait ») : par exemples, un mot de passe, une date de naissance, etc.
- Le facteur matériel, AF2 (« ce qu'on possède ») : par exemples une carte à puce, un certificat numérique, une clé USB...
- Le facteur biométrique physiologique AF3, (« ce qu'il est ») : par exemples, une empreinte digitale, les caractéristiques d'une pupille, une signature vocale...
- Le facteur comportemental AF4 (« ce qu'il fait ») : par exemple, une signature manuscrite...

Toutefois, il est également important que l'utilisation de tels mécanismes ne constitue pas un frein pour le commerce enligne en étant trop complexe à mettre en oeuvre ou à utiliser, ou bien en impliquant des coûts trop important, notamment par l'utilisation de matériels spécifiques.

Ainsi, de façon classique, l'authentification d'une donnée numérique se base sur une fonction de hachage ou un mécanisme cryptographique. Un tel procédé s'applique valablement à un mot de passe, une date de naissance, un numéro de carte SIM... ou toute autre donnée totalement déterminée, c'est-à-dire qui n'est pas soumis à une fluctuation même mineure.

Toutefois, certaines données peuvent subir des fluctuations : c'est le cas d'une signature manuscrite, par exemple, qui n'est jamais totalement identique. Appliquer une fonction de hachage ou un mécanisme de chiffrement sur ce type de données ne donne pas le résultat escompté car une différence mineure en entrée doit résulter en des différences discriminantes en sortie. En conséquence, une signature manuscrite légèrement différente pourra provoquer la non-authentification de l'utilisateur.

### RESUME DE L'INVENTION

Le but de la présente invention est de fournir une méthode d'authentification palliant au moins partiellement les inconvénients précités.

A cette fin, la présente invention propose un Procédé de détermination d'un niveau de confiance associé à des informations récoltées par un terminal de communication par rapport à un ensemble d'empreintes, comprenant les étapes de :
- Détermination de règles associant un critère de proximité à chaque empreinte dudit ensemble ;
- Détermination, par ledit terminal de communication, d'un secret partiel pour chaque empreinte dudit ensemble en fonction desdites règles et desdites informations récoltées ;
- Calcul, par ledit terminal de communication, d'un score global à partir desdits secrets partiels, ledit score global étant représentatif dudit niveau de confiance.

Suivant des modes de réalisation, l'invention comprend une ou plusieurs des caractéristiques suivantes qui peuvent être utilisées séparément ou en combinaison partielle entre elles ou en combinaison totale entre elles :
- certaines desdites empreintes portent sur des données dudit terminal de communication et dudit utilisateur ;
- lesdites données appartiennent à un groupe comprenant l'identifiant IMEI, l'identifiant de la carte SIM, un identifiant du système d'exploitation, la liste des applications logicielles installées sur ledit terminal de communication, la liste des contacts dudit utilisateurs, la liste des réseaux connus dudit terminal de communication, la localisation géographique dudit terminal de communication, le niveau de charge de la batterie dudit terminal de communication, des données personnelles, un certificat numérique, une clé USB, des données physiologiques ou une signature manuscrite dudit utilisateur ;
- ledit terminal reçoit préalablement des indicateurs d'empreintes à intégrer dans ledit ensemble d'empreintes ;
- lesdites règles sont transmises audit terminal de communication ;
- le procédé comporte une phase préalable d'enrôlement dans laquelle une information de profil est associée à chaque empreinte et un secret partiel initial est déterminé pour chaque empreinte.

Un autre aspect de l'invention concerne un procédé d'authentification d'un utilisateur d'un terminal de communication auprès d'un serveur d'authentification pour un service donné, comportant :
- Une détermination d'un score global selon le procédé précédemment décrit ;
- La détermination de si ledit utilisateur est authentifié en fonction dudit score global.

Un autre aspect de l'invention concerne un terminal de communication comportant des moyens de calcul pour déterminer un secret partiel pour chaque empreinte d'un ensemble d'empreintes, chaque empreinte dudit ensemble étant associé à un critère de proximité au moyen de règles, lesdits moyens de calcul étant prévus pour déterminer ledit secret partiel en fonction desdites règles et d'informations récoltées par ledit terminal de communication, ainsi que pour calculer un score global à partir desdits secrets partiels ; ledit score global étant représentatif d'un niveau de confiance associé auxdites informations récoltées par rapport audit ensemble d'empreintes.

Suivant des modes de réalisation, l'invention comprend en outre des moyens pour recevoir préalablement des indicateurs d'empreintes à intégrer dans ledit ensemble d'empreintes.

Un autre aspect de l'invention concerne un système comprenant au moins un terminal de communication tel que précédemment décrit et un serveur d'authentification connectés par un réseau de communication.

L'invention permet donc d'évaluer un niveau de confiance dans la récolte d'informations par un terminal de communication par rapport à un ensemble d'empreintes préalablement établi.

L'invention permet de fournir une méthode qui ne nécessite pas le déploiement d'équipements matériels dédiés coté client. Elle peut être totalement mise en oeuvre par des modules logiciels déployés sur des terminaux de communication et des serveurs existants sur le marché.

Comme il sera vu plus tard, la méthode selon l'invention permet également de prendre en compte les variations inhérentes à certaines empreintes comme notamment celles liées aux données biométriques, par l'utilisation de ces critères de proximité.

En outre, l'invention permet de prendre en compte la problématique du respect de la vie privé en ne communiquant aucune donnée sensible (en regard de la vie privée) en dehors du terminal de communication, car toutes les manipulations sur ses données sont effectuées sur le terminal de communication lui-même et ne sont jamais transmises à un serveur ou une autre entité extérieure au terminal de communication. On entend ici par données sensibles en regard de la vie privée à la fois les données propres à l'utilisateur et celles propres aux terminal de communication lui-même.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de contexte dans lequel peut s'insérer l'invention.
La figure 2 représente un organigramme schématique d'un mode de réalisation possible de l'invention.

### DESCRIPTION DETAILLEE DE L'INVENTION

Comme précédemment évoqué, l'invention peut en particulier s'appliquer dans le cadre d'une authentification pour une transaction entre un utilisateur d'un terminal de communication et un fournisseur de service.

Toutefois, d'autres applications sont également possibles comme, par exemple, un coffre-fort électronique, etc.

La description qui va suivre concerne plus particulièrement l'exemple d'un mécanisme d'authentification, mais les principes exposés peuvent être généralisées et adaptés à d'autres cas d'applications.

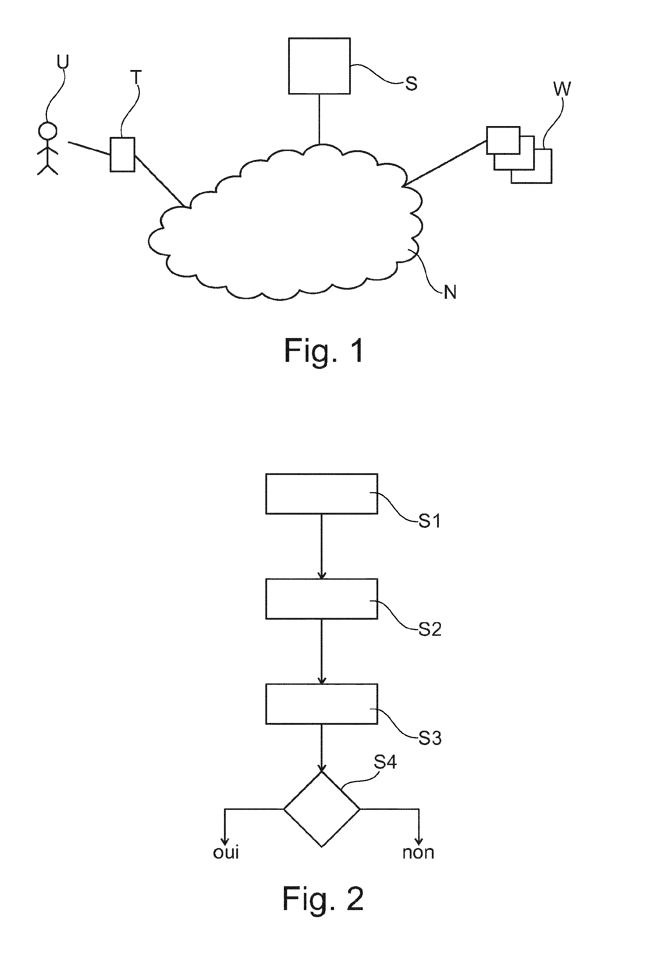

Dans l'exemple illustré par la figure 1, l'utilisateur U utilise un terminal de communication T qui est connecté à un réseau de communication N. Ce réseau de communication peut figurer le réseau Internet : il peut s'agir d'un ensemble de réseaux divers (réseaux d'accès, coeur de réseau ou « backbone »...) qui ne seront pas décrits dans la mesure où l'invention peut s'appliquer de façon indépendante de l'architecture de communication sous-jacente.

Le terminal de communication T peut typiquement être un terminal mobile de communication (y compris un terminal de type « smartphone » ou tablette numérique). Il peut également être un terminal tel un ordinateur fixe ou portable, etc.

Grâce à ce réseau de communication N, le terminal de communication peut établir une communication avec un fournisseur de service W. Ce fournisseur de service W peut typiquement être un site marchand, permettant à l'utilisateur U d'effectuer une transaction commerciale, notamment l'achat d'un bien ou d'un service. Le fournisseur de service W peut aussi être un site manipulant des données sensibles : le site d'une banque, par exemple, sur lequel l'utilisateur peut visualiser ses comptes ; etc.

Dans le cadre de transactions sur un réseau de communication avec un fournisseur de service W, typiquement, afin de garantir l'identité de l'utilisateur U, un serveur d'authentification S est mis en oeuvre.

Ce serveur d'authentification S est en général distinct du fournisseur de service W. C'est notamment le cas d'une transaction commerciale qui peut être ponctuellement effectuée avec une très grande variété de sites marchands. Dans le cadre d'un fournisseur de service « de confiance » (comme une banque), le serveur d'authentification S peut être intégré à celui-ci.

En fonction du cadre dans lequel est déployée l'invention, et du type d'applications, ou services, différents niveaux de confiance peuvent être souhaités. Par exemple :
- Un niveau de confiance élevé peut être associé à une application impliquant des risques élevés pour au moins une partie (utilisateur ou fournisseur de service). C'est par exemple le cas des connexions à des sites d'institutions bancaires, ou à des transactions commerciales importantes et/ou dans lesquelles transitent des informations bancaires.
- Des niveaux de confiance moindres peuvent être associés à des applications impliquant des risques moins élevés. Il peut s'agir de micro-paiements avec un compte ou une carte à débit limité ; ou bien des accès à des services moins sensibles.

En outre, pour une même application, un niveau de confiance moindre peut être demandé si l'utilisateur s'est déjà authentifié il y a peu de temps.

En fonction du service, et donc d'un niveau de confiance souhaité, un ensemble d'empreintes peut être prévu. Cette détermination des empreintes à prévoir pour un service donné est illustrée par la référence S1 sur l'organigramme schématique de la figure 1.

Ces empreintes peuvent être toutes informations secrètes (c'est-à-dire que ne peut être connu ou reproduite par un tiers) permettant d'identifier de façon unique et sécurisé un utilisateur. Ils peuvent être classifiés selon les facteurs d'authentification, AF1, AF2, AF3, AF4 précédemment évoqués.

Ils portent typiquement sur des données de l'utilisateur U et/ou du terminal T utilisé par l'utilisateur. De la sorte, on peut assurer que niveau de confiance concerne à la fois le terminal et l'utilisateur de ce terminal.

Dans le cadre d'une application d'authentification, l'invention peut permettre d'authentifier l'utilisateur U du terminal T. Il est donc possible d'authentifier soit un utilisateur, soit un terminal, soit un utilisateur utilisant un certain terminal. Ceci peut permettre de déterminer qu'un utilisateur donné utilise un terminal inhabituel et d'éventuellement déclencher un traitement particulier en ce sens. Cela peut permettre de détecter une attaque sur un terminal T. Cela peut également permettre de déterminer qu'un terminal donné est utilisé par un utilisateur inhabituel, et d'éventuellement déclencher un traitement particulier en ce sens.

Les données en question qui peuvent être utilisées comme empreintes peuvent appartenir à un groupe comprenant :
- l'identifiant IMEI (International Mobile Equipment Identity) du terminal T,
- le numéro ou identifiant de la carte SIM (Subscriber Identify Module),
- un identifiant du système d'exploitation : cet identifiant peut représenter non seulement le système utilisé (iOS, Android, Windows, Linux...), mais également sa version,
- la liste des applications logicielles installées sur le terminal de communication T,
- la liste des contacts de l'utilisateur U, notamment dans le répertoire du terminal T ou sur un compte déporté (contacts « google »...)
- la liste des réseaux connus du terminal de communication T, par exemples les réseaux WIFI
- la liste des équipements avec lequel il s'est apparié via un réseau Bluetooth,
- la localisation géographique du terminal de communication T,
- le niveau de charge de la batterie dudit terminal de communication T ;
- des données personnelles comme une date de naissance, le prénom du conjoint, etc.
- un certificat numérique,
- une clé USB contenant des informations sécurisées
- des données physiologiques comme une empreinte digitale, les caractéristiques d'une pupille, une signature vocale...
- La signature manuscrite de l'utilisateur U...

Les empreintes peuvent concerner bien d'autres données. Certaines de ces données pourront apparaître ultérieurement en fonction de l'évolution de la technologie des terminaux et réseaux de communication.

Dans un cas extrême, une unique empreinte peut être prévue, mais d'une façon générale, une combinaison de plusieurs empreintes peut être utilisée afin de déterminer si l'utilisateur U du terminal T est authentifié.

Certains de ces empreintes visent à identifier de façon unique et sécurisée l'utilisateur U, comme un mot de passe, ou le terminal T, comme l'identifiant IMEI.

D'autres ne le peuvent pas, comme la localisation géographique, ou le niveau de charge de la batterie. Dans le cadre de l'invention, ces empreintes ne peuvent pas être utilisées seules pour authentifier un utilisateur d'un terminal, mais en combinaison afin de constituer un faisceau qui doit être concordant pour déterminer cette authentification. Le mécanisme sera explicité dans ce qui suit.

Des règles peuvent être définies qui associent à chaque empreinte un critère de proximité.

Ce critère de proximité vise à permettre de mesurer une distance entre une première valeur et une seconde valeur de l'empreinte considérée, plus précisément, comme nous le verrons plus tard, entre une première valeur déterminée lors d'une phase d'enrôlement et stockée dans un profil, et une seconde valeur appartenant à des informations récoltées ultérieurement par le terminal de communication.

Ce critère de proximité peut dépendre de la nature de l'empreinte :
- pour une position géographique, le critère de proximité peut être une proximité géographique (une distance géographique)
- pour une chaîne de caractères (mot de passe, nom, etc.), le critère de proximité pour le nombre de caractères différents entre deux chaînes.
- Pour une charge de batterie, le critère de proximité peut être une différence en pourcentage. Il peut être défini en fonction d'un profil d'utilisation de la batterie.
- Pour une empreinte digitale, un algorithme d'analyse d'image peut être utilisé afin de générer une métrique représentative d'une différence entre deux images
- Pour la liste de contacts, ou d'applications installée, le critère de proximité peut être le nombre d'éléments différents entre deux listes.
- Etc.

Le critère de proximité est défini par la nature de l'empreinte (type de distance ou métrique...). Typiquement, il comporte en outre une valeur définissant un seuil ou un intervalle (c'est-à-dire un seuil de tolérance).

Pour une nature donnée, le seuil peut être différent en fonction des empreintes. Par exemple, un mot de passe et une adresse postale sont des chaines de caractères, mais ils peuvent être tous les deux associés à des critères de proximité se distinguant par la valeur du seuil (on peut tolérer des fautes de frappe sur une adresse postale, mais pas sur un mot de passe) ; la nature du critère est néanmoins la même (distance entre deux chaînes de caractères).

D'une façon générale, selon un mode de réalisation de l'invention, on peut classer les empreintes en 4 catégories, dont dépend la nature du critère de proximité :
- Type «Hamming»: il s'agit de paramètres comme un numéro de SIM, un identifiant IMEI... : la distance de Hamming entre la première valeur et la seconde valeur de l'empreinte doit être inférieure à un seuil ;
- Type « whitelist » : version du système d'exploitation, version du noyau... : la valeur de l'empreinte doit être comprise dans une liste donnée (qui peut être rendue anonyme) ;
- Type « liste » : liste des contacts, des réseaux connus, etc. : la première et la seconde valeur de la liste ne doivent pas trop différer.
- Type «distance euclidienne»: géolocalisation, utilisation de la batterie... : la distance euclidienne entre la première valeur et la seconde valeur de l'empreinte doit être inférieure à un seuil ;

En fonction du service et du niveau d'authentification souhaité, un ensemble différent d'empreintes peut être prévu.

Plus concrètement, un petit nombre d'empreintes ou des empreintes plus simples peuvent être prévus pour un niveau d'authentification peu élevé. Une empreinte est simple si elle n'implique pas de manipulations pour l'utilisateur U (saisie d'un mot de passe ou de code PIN, etc.).

En outre, le critère de proximité attaché aux empreintes peut dépendre également du niveau de confiance souhaité : plus ce niveau est élevé et plus le critère de proximité peut être contraignant. Par exemple, pour la saisie d'une chaîne de caractères de type « nom », « adresse », etc., on peut tolérer plus ou moins de caractères différents en fonction du niveau de confiance souhaité.

Des indicateurs d'empreintes à intégrer dans l'ensemble d'empreintes peuvent être fourni par le serveur d'authentification S, en fonction du service (et donc du niveau d'authentification) souhaité. Ils peuvent également être fournis par le fournisseur de service W (banque, site de commerce enligne...). Ces indicateurs permettent au terminal de communication de déterminer quelles empreintes (mot de passe, secrets biométriques, etc.) doivent être traitées.

Selon un mode de réalisation de l'invention, une première étape préalable d'enrôlement est mise en oeuvre. Cette étape est illustrée S2 sur la figure 2.

Elle consiste à associer une information de profil pour chaque empreinte prévue.

Un mécanisme d'authentification peut comporter une telle étape préalable consistant à initialiser le mécanisme d'authentification d'un utilisateur U d'un terminal T. Il s'agit d'une méthode d'initialisation dans lequel l'utilisateur s'inscrit de lui-même en fournissant des informations.

C'est pendant cette étape d'enrôlement que l'utilisateur peut saisir des informations personnelles (nom de famille, prénom, date de naissance, adresse...), des informations biométriques initiales ou « de profil » (signature manuscrite...), un mot de passe... qui vont constituer des informations de profil d'au moins certaines empreintes parmi l'ensemble des empreintes prévues.

De façon automatique et éventuellement transparente, le terminal de communication via des moyens logiciels adaptés peut également fournir des informations de profil pour d'autres empreintes (localisation géographique, liste des applications installées, liste des contacts, identifiant de la carte SIM, liste des réseaux connus, niveau de charge de la batterie, identifiant du système d'exploitation, etc.).

Selon l'invention, les valeurs de ces empreintes ne seront pas transmises en dehors du terminal de communication T, et ne servent qu'à la détermination des secrets partiels, qui seront explicités plus loin.

Des secrets partiels initiaux peuvent être déterminés lors de cette étape S2, sur la base des valeurs d'empreintes, et intégrés aux informations de profil. Ce secret est dit « partiel » au sens où il concerne une unique empreinte parmi l'ensemble des empreintes prévues

Un secret global peut également être déterminé à partir des secrets partiels initiaux.

Ces secrets initiaux, partiels et global, serviront de base pour la comparaison avec des secrets partiels et global déterminés ultérieurement dans la phase d'exploitation. Cette comparaison, qui pourra fournir un score, permet d'évaluer un niveau de confiance.

Le mécanisme de détermination des secrets initiaux est identique que le mécanisme mis en oeuvre pour déterminer ces secrets (partiels ou global) dans la phase d'exploitation: par soucis d'économie et de clarté, il sera détaillé uniquement dans la description qui va suivre, correspondant à la phase d'exploitation.

Lors d'une utilisation ultérieure du service (par exemple, une connexion à un site de commerce enligne ou de banque, etc.), la phase d'exploitation proprement dite est déployée.

Elle comprend notamment une étape S3 de détermination d'un secret partiel pour chaque empreinte.

Cette étape S3 comprend une sous-étape de récolte d'informations par le terminal de communication T. Il s'agit de demander et récupérer des informations auprès de l'utilisateur U (mot de passe, etc.), ou de récupérer des informations de façon automatique auprès du terminal T. Cette sous-étape est donc similaire à une partie du processus mis en place lors de l'enrôlement pour déterminer les informations de profil.

Les informations récoltées correspondent (au moins) aux empreintes prévues, et constituent une seconde valeur de ces empreintes.

Par conséquent, à ce stade, pour chaque empreinte, on dispose d'une information de profil (première valeur) et d'une information récoltée (seconde valeur).

L'étape S3 consiste à déployer un moteur de règles prévu pour déterminer un secret partiel pour chaque empreinte, sur la base de l'information récoltée.

Ces règles peuvent être transmises au terminal de communication T. Ainsi, le terminal applique une politique de sécurité, instanciée par ces règles, mais sans la décider lui-même.

Plus précisément, cette détermination des secrets partiels vise à appliquer ces règles sur les informations récoltées de façon indépendante pour chaque empreinte et en fonction du critère de proximité associé à chaque empreinte.

Dans la mesure où des secrets partiels initiaux ont été préalablement déterminés de la même façon, il est possible alors de les comparer en déterminant un score qui indique dans quelle mesure une empreinte est reconnue et est donc représentatif d'un niveau de confiance dans les informations récoltées pour cette empreinte.

Ainsi, dans une étape S4, il est décidé si l'utilisateur U est authentifié, ou plus généralement, si un niveau de confiance suffisant est atteint pour les informations récoltées, en fonction de ces secrets partiels. Cette étape correspond à un cas d'usage relatif à un procédé d'authentification. Dans le cadre d'autres applications, cette étape doit être adaptée pour utiliser les secrets partiels de façon appropriée.

Différentes mises en oeuvre sont bien sûr possibles, mais typiquement les règles sont mises en oeuvre par des « extracteurs flous » qui sont prévus pour déterminer un secret partiel à partir de la mise en correspondance de l'information récoltée et l'information de profil et d'un critère de proximité. Ces deux informations sont comparées selon ce critère de proximité.

La règle spécifie la méthode de comparaison, ou plus généralement de mise en correspondance, qui est adaptée à la nature de l'empreinte Cet aspect de l'invention ainsi que des exemples seront donnés plus loin.

Par exemple, pour une empreinte donnée, l'étape S3 peut consister à vérifier si l'information récoltée est suffisamment proche, au sens du critère de proximité associée, de la valeur initiale de l'empreinte (c'est-à-dire de la valeur de profil). Si oui, le score est positif. Dans le cas contraire, il est négatif.

Le score peut appartenir à un intervalle de valeurs, et être ainsi représentatif d'un niveau de confiance en indiquant dans quelle mesure une empreinte est reconnue.

Par exemple, parmi les valeurs que peuvent prendre le score, on peut indiquer une criticité, c'est-à-dire si le non-respect d'une empreinte est « fatal » ou non. La non-recognition d'une empreinte fatale engendrera automatiquement, à l'étape S4, la non authentification de l'utilisateur U du terminal T. Mais le non-respect d'une empreinte non-fatale n'aura pas une telle conséquence et on peut prévoir qu'il faut un certain nombre de telles non-recognitions avant d'engendrer la non-authentification.

Le tableau ci-dessous donne un exemple concret d'utilisation de l'invention, avec deux empreintes : la liste des contacts et la liste des applications.

| empreintes | Fatal / non fatal | Seuil de tolérance | Valeurs initiales ou de profils |
|---|---|---|---|
| Liste de contacts | fatal | 3 | C1,C2,C3,C4,C5, C6,C7,C8,C9,C10 |
| Liste des applications | Non fatal | 10 | A1,A2,A3....An |

On suppose que lors d'une phase d'authentification, les informations récoltées pour l'empreinte sont :
C1,C2,C'3,C4,C5,C6,C7,C8,C9,C'10

Les valeurs de profils diffèrent des informations récoltées par deux contacts : C'3 et C'10. Or, le seuil de tolérance pour cette empreinte est de 3, signifiant que 3 différences sont tolérées avant de générer un score négatif. Le score déterminé est donc positif.

Par contre, si les informations récoltées sont :
C' 1,C2,C'3,C4,C5,C6,C7,C8,C'9,C' 10

La différence est de 4 contacts et est supérieure au seuil de tolérance. On détermine donc un score négatif et même fatal.

On suppose par ailleurs que, lors de la phase d'authentification, les informations récoltées pour la liste des applications diffèrent de la valeur profil par 11 applications. Alors un score négatif mais non-fatal est déterminé.

Comme évoqué précédemment, bien d'autres empreintes peuvent être utilisés. Des extracteurs flous adaptés doivent être conçus en fonction de la nature de l'empreinte considérée.

L'empreinte « identifiant du système d'exploitation » peut également être utile car un même terminal T est habituellement lié à un système d'exploitation donné. Un changement du système d'exploitation (entre l'enrôlement et l'authentification) peut entrainer un score négatif et fatal.

L'identifiant du système d'exploitation peut comporter également un numéro de version. On peut supposer qu'un changement vers une version supérieure (« upgrade ») est un comportement normal qui engendre donc un score positif, mais qu'a contrario, un changement vers une version inférieure est suspect et doit engendrer un score négatif, voire fatal.

L'empreinte « signature manuscrite » peut nécessiter pour son traitement de déployer un algorithme d'analyse d'image. Cet algorithme doit pouvoir fournir un score qui est fonction d'une mesure de proximité entre une signature de profil et une signature récoltée. Pour ce faire, l'algorithme doit ne pas être sensible à des différences graphiques mineures mais doit établir un seuil entre celles-ci et des différences graphiques majeures.

Dans une étape S4, en fonction des secrets partiels correspondant aux empreintes de l'ensemble des empreintes prévues pour le service, un secret global peut être établi, et permettre de déterminer si l'utilisateur U du terminal T est authentifié ou non, par comparaison avec le secret global initial et détermination d'un score, représentatif de cette comparaison.

L'établissement de ce secret global peut être réalisé par le moteur de règles précédemment évoqué.

Le moteur de règle peut considérer l'ensemble des secrets partiels et appliquer une règle telle que :
- Si un score partiel est négatif et fatal, le score global est négatif.
- Si aucun score partiel n'est fatal, alors le score global correspond à la majorité des scores partiels.

D'autres mécanismes sont bien évidemment possibles.

Par exemple, comme il a été évoqué, certains ou tous les scores peuvent prendre des valeurs qui ne sont pas binaires mais « floues » ou numériques dans un certain intervalle. Cette valeur peut directement correspondre à une proximité, par exemple établie en distance euclidienne. Auquel cas, le score global peut être une moyenne des scores partiels.

On voit que différentes politiques peuvent être facilement mises en oeuvre par le réglage des différents paramètres du mécanisme de l'invention, c'est-à-dire en jouant sur les seuils de tolérance, sur la criticité des empreintes, etc.

Par le caractère « flou » du mécanisme, il est possible de prendre en compte des empreintes impliquant une certaine variabilité : signature manuscrite, etc.

Il devient également possible de prendre en compte des nouvelles empreintes comme la géolocalisation, le niveau de charge de la batterie, etc. en leur associant un critère de proximité et des seuils appropriés. Ces nouvelles empreintes permettent d'enrichir les stratégies d'authentification possibles, et de permettre de nouvelles possibilités.

Différentes mises en oeuvre architecturales sont possibles pour ce mécanisme de l'invention, dans le cadre d'une application à l'authentification.

Une première étape peut être prévue dans laquelle le serveur d'authentification S transmet préalablement au terminal de communication T l'ensemble des types d'empreinte pour le service demandé.

Le terminal T peut alors mettre en oeuvre l'étape S3 consistant à déterminer un secret partiel pour chaque empreinte, ainsi que l'étape S2 correspondant à la phase d'enrôlement.

L'étape de détermination si l'utilisateur U doit au non être authentifié peut consister en :
- Un calcul d'un secret « global », par exemple une clé, en fonction des secrets partiels, par le terminal T, d'une part pendant la phase d'enrôlement et d'autre part pendant une phase d'exploitation.
- La transmission de cette clé vers le serveur d'authentification S, lors de ces deux phases.
- La détermination par le serveur S si l'utilisateur est authentifié en fonction des deux valeurs de clé.

Selon un autre mode de réalisation, cette étape S4 peut consister en ce calcul de la clé par le terminal, puis la preuve locale que la clé a bien été retrouvée. Selon ce mode de réalisation, la clé n'est donc pas transmise au serveur d'authentification S, et la détermination de si l'utilisateur est authentifié ou non est effectuée localement par le terminal T. Ce mécanisme fait usage d'un procédé cryptographique connu sous le terme de « preuve de connaissance » (ou « proof of knowledge », selon la terminologie en langue anglaise).

Ce secret, ou clé, peut être calculé par l'application d'une fonction sur l'ensemble des secrets partiels. Il peut alors être comparé à une valeur de profil, établie lors de la phase d'enrôlement pour déterminer s'il y a authentification au non. La fonction peut être une simple fonction de hachage appliquée à chaque secret partiel, suivi d'une concaténation. Le calcul peut être fait de sorte que si l'ensemble des secrets partiels ont des valeurs suffisamment proches des valeurs de profil, le secret global correspond à une valeur de profil du secret global : la valeur d'empreinte est alors retrouvée.

L'invention permet donc d'authentifier un utilisateur utilisant un terminal en prenant en compte des fluctuations sur les valeurs des empreintes, en fonction de critères de proximité propres à chaque empreinte, et sous la contrainte de seuils de tolérance dépendant d'un niveau de confiance minimal à atteindre pour cette authentification.

D'autres méthodes peuvent également être mises en place. Notamment, des méthodes peuvent être prévues en fonction de la politique d'authentification à mettre en place, et notamment en fonction des valeurs qui peuvent être prises par les scores partiels (positif/négatif ; fatal/négatif/positif, spectre continu de valeurs, etc.)

L'invention permet d'éviter de transmettre les données personnelles vers un dispositif extérieur à l'invention, qu'il s'agisse d'un serveur d'authentification ou d'un autre terminal dans le cadre d'une transaction pair-à-pair, ou d'un site de commerce enligne, ou tout autre dispositif.

Les données personnelles sont en effet traitées localement, en fonction d'une politique (qui peut être transmise par un serveur d'authentification ou par d'autres dispositifs) et seule une information synthétique comme le secret global qui est par exemple une clé, est transmise vers le réseau de communication.

Le terminal de communication T se contente d'appliquer des règles reçus afin de déterminer dans un premier temps des secrets partiels puis un secret global, ou clé. Il ne peut « tricher » et retrouver la bonne clé avec des valeurs d'empreintes invalides.

Cette clé est représentative du terminal T et de l'utilisateur U (c'est-à-dire de l'adéquation entre informations de profil et informations récoltées), mais elle ne permet pas de remonter à la connaissance des informations qui ont servi à la générer (c'est-à-dire les valeurs d'empreintes) et dont le secret est ainsi garanti.

Par conséquent, les données personnelles (mots de passe, dates de naissance, liste des contacts, etc.) ne sont pas transmises ; ce qui est un avantage certain pour les utilisateurs mais permet également de respecter les réglementations de plus en plus fortes des Etats et des organismes supranationaux.

Par ailleurs, la non-transmission des données personnelles permet d'atteindre un degré de sécurité supplémentaire. En effet, moins de données sont transmises sur un canal, et moins le risque d'interception et d'utilisations frauduleuses est élevé.

L'invention permet donc un respect total de la vie privée des utilisateurs, tout en évitant les risques d'usurpation. En outre, on ne stocke pas de clé.

De plus, il est assuré que le terminal T exécute bien les règles qui lui ont été transmises qu'il ne peut pas connaître à l'avance. Ce mécanisme contribue également à la robustesse du procédé selon l'invention.

En outre, le mécanisme est transparent pour l'utilisateur : les secrets partiels sont déterminés automatiquement par un module logiciel embarqué dans le terminal, en fonction d'informations stockées, ou ponctuellement fournies par l'utilisateur U.

En outre, dans la mesure où les traitements les plus complexes sont effectués en local sur le terminal de communication T, le procédé gagne en efficacité et temps de traitement : seuls des faibles quantités de données sont en effet transmis sur le réseau de communication N.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de détermination d'un niveau de confiance associé à des informations récoltées par un terminal de communication (T) par rapport à un ensemble d'empreintes, comprenant les étapes de :
- Détermination de règles associant un critère de proximité à chaque empreinte dudit ensemble ;
- Détermination, par ledit terminal de communication (T), d'un secret partiel pour chaque empreinte dudit ensemble en fonction desdites règles et desdites informations récoltées ;
- Calcul, par ledit terminal de communication (T), d'un score global à partir desdits secrets partiels, ledit score global étant représentatif dudit niveau de confiance.

2. Procédé selon la revendication 1, dans lequel certains desdites empreintes portent sur des données dudit terminal de communication (T) et dudit utilisateur (U).

3. Procédé selon la revendication précédente, dans lequel lesdites données appartiennent à un groupe comprenant l'identifiant IMEI, l'identifiant de la carte SIM, un identifiant du système d'exploitation, la liste des applications logicielles installées sur ledit terminal de communication (T), la liste des contacts dudit utilisateurs (U), la liste des réseaux connus dudit terminal de communication (T), la localisation géographique dudit terminal de communication (T), le niveau de charge de la batterie dudit terminal de communication (T), des données personnelles, un certificat numérique, une clé USB, des données physiologiques ou une signature manuscrite dudit utilisateur (U).

4. Procédé selon l'une des revendications précédente, dans lequel ledit terminal (T) reçoit préalablement des indicateurs d'empreintes à intégrer dans ledit ensemble d'empreintes.

5. Procédé selon l'une des revendications précédentes dans lequel lesdites règles sont transmises audit terminal de communication (T).

6. Procédé selon l'une des revendications précédentes, comportant une phase préalable d'enrôlement dans laquelle une information de profil est associée à chaque empreinte et un secret partiel initial est déterminé pour chaque empreinte.

7. Procédé d'authentification d'un utilisateur (U) d'un terminal de communication (T) auprès d'un serveur d'authentification (S) pour un service donné, comportant :
- Une détermination d'un score global selon le procédé selon l'une des revendications précédentes ;
- La détermination de si ledit utilisateur est authentifié en fonction dudit score global.

8. Terminal de communication (T) comportant des moyens de calcul pour déterminer un secret partiel pour chaque empreinte d'un ensemble d'empreintes, chaque empreinte dudit ensemble étant associé à un critère de proximité au moyen de règles, lesdits moyens de calcul étant prévus pour déterminer ledit secret partiel en fonction desdites règles et d'informations récoltées par ledit terminal de communication (T), ainsi que pour calculer un score global à partir desdits secrets partiels ; ledit score global étant représentatif d'un niveau de confiance associé auxdites informations récoltées par rapport audit ensemble d'empreintes.

9. Terminal de communication (T) selon la revendication précédente comportant en outre des moyens pour recevoir préalablement des indicateurs d'empreintes à intégrer dans ledit ensemble d'empreintes.

10. Système comprenant au moins un terminal de communication (T) selon l'une des revendications 8 ou 9 et un serveur d'authentification (S) connectés par un réseau de communication (N).
